# EUROPEAN PATENT APPLICATION

(11) **EP 3 293 376 A1**
(43) Date of publication of application: **14.03.2018**
(21) Application number: 15891308.7
(22) Date of filing: 07.05.2015
(51) Int. Cl.: F01N 3/20, F01N 3/28, F01P 7/14, E02F 9/00

(54) **UREA-WATER SOLUTION HEATING AND COOLING DEVICES FOR CONSTRUCTION EQUIPMENT**

(71) Applicant: Volvo Construction Equipment AB, 631 85 Eskilstuna (SE)
(72) Inventor: PARK, Cheol-Hyun, Changwon-si Gyeongsangnam-do 642-778 (KR)
(74) Representative: Volvo Technology Corporation
(86) International application number: PCT/KR2015/004560
(87) International publication number: WO 2016/178444

(57) **Abstract**

Disclosed is a urea-water solution heating and cooling device for construction equipment capable of reducing nitrogen oxides in exhaust gas discharged from an engine. The urea-water solution heating device, according to the present invention, includes: an SCR mounted on an exhaust pipe of an engine to perform a reduction process on nitrogen oxides in exhaust gas discharged along the exhaust pipe; a urea-water solution tank that stores a urea-water solution; an injector mounted on the exhaust pipe on the upstream of the SCR to inject the urea-water solution supplied from the urea-water solution tank into the exhaust pipe; a valve installed on a conduit between an engine coolant pump and the urea-water solution tank to supply engine coolant introduced from the engine coolant pump to the urea-water solution tank when being opened in order to increase the temperature of the urea-water solution in the urea-water solution tank to a set value; and a controller that opens the valve in order to supply the engine coolant to the urea-water solution tank and controls to drive a urea-water solution pump in order to supply the urea-water solution in the urea-water solution tank to the injector.

## Description

### Technical Field

The present invention relates to urea-water solution heating and cooling devices. More particularly, the present invention relates to a urea-water solution heating and cooling device for construction equipment which is configured to reduce nitrogen oxides in exhaust gas discharged from an engine.

### Background Art

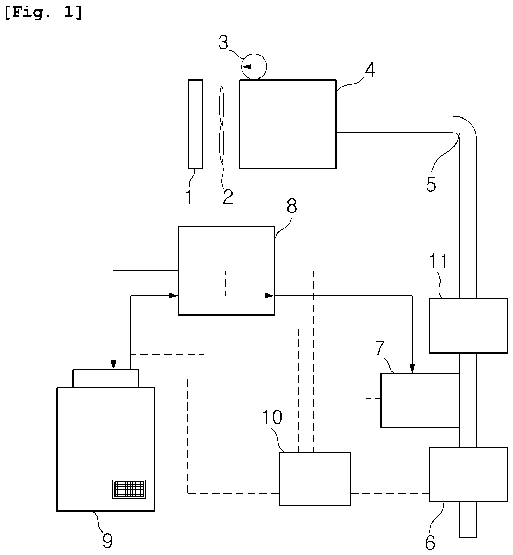

FIG. 1 is a diagram of a device reducing nitrogen oxides by supplying a urea-water solution to an exhaust pipe for construction equipment according to a prior art.

As shown in FIG. 1, a heat exchanger 1, a cooling fan 2, and an engine coolant pump 3 are provided to an engine 4.

A selective catalytic reduction (SCR) 6 performing a reduction process by catalysis of nitrogen oxides (NOx) in exhaust gas discharged along an exhaust pipe 5 of the engine 4 is mounted on the exhaust pipe 5.

A urea injector 7 is mounted on the exhaust pipe 5 at an upstream of the SCR 6 to inject the urea-water solution (product name: Adblue, 32.5%) into the exhaust gas passing through the SCR 6.

A urea-water solution tank 9 storing the urea-water solution, supplied to the injector 7 by a urea-water solution pump 8, is connected to the injector 7.

A controller 10 controlling to drive the urea-water solution pump 8 in order to supply the urea-water solution in the urea-water solution tank 9 to the injector 7 is connected to the urea-water solution pump 8 and to the injector 7.

According to the construction as described above, CO and HC in the exhaust gas discharged from the engine 4 along the exhaust pipe 5 is reduced by catalysis of a diesel oxidation catalyst (DOC) (as one example of a catalyst, platinum is used) which is an oxidation catalyst device, and particle matter in the exhaust gas is removed by diesel particulate filter (DPF).

According to Tier-4 final emissions regulations for diesel engines in 2014, in order to reduce more nitrogen oxides in the exhaust gas passing through the DPF, the urea injector 7 mounted on the exhaust pipe 5 disposed between the DPF 11 and the SCR 6 receives the urea-water solution from the urea-water solution tank 9 by the urea-water solution pump 8 and injects the urea-water solution into the exhaust gas.

Thus, the nitrogen oxides are converted into N₂ and H₂O by catalysis between the urea-water solution and the SCR 6, thereby reducing the nitrogen oxides (NOx) in the exhaust gas.

On the other hand, since the urea-water solution contains much water and the freezing point thereof is -11°C, when the temperature of outside air is low, the urea-water solution in the urea-water solution tank 9 is heated to an appropriate temperature before the urea-water solution tank 9 supplies the urea-water solution to the urea injector 7.

In addition, a urea-water solution hose or a conduit connecting among the urea-water solution tank 9, the urea-water solution pump 8, and the urea injector 7 may have an electric heating wire therein to heat the urea-water solution therein.

When the temperature of the urea-water solution supplied to the urea injector 7 from the urea-water solution tank 9 is higher than a set temperature, components of the urea-water solution vaporize and emit odor. In addition, since chemical reaction occurs and irreversible chemical derivatives are generated due to the vaporization of the urea-water solution, corrosion occurs which affects the durability of related parts such as the urea-water solution pump 8.

In contrast, when the temperature of the urea-water solution supplied to the urea injector 7 is lower than the set temperature, the urea-water solution solidifies, thereby the urea injector 7 is not capable of injecting the urea-water solution into the exhaust pipe 5.

### Disclosure

### Technical Problem

Accordingly, the present invention has been made keeping in mind the above problems occurring in the related art, and an object of the present invention is to provide a urea-water solution heating and cooling device for construction equipment capable of maintaining a urea-water solution supplied to an exhaust pipe in a urea-water solution tank at an appropriate temperature by using an engine coolant so as to reduce nitrogen oxides of exhaust gas.

### Technical Solution

In order to accomplish the above and other objects, a urea-water solution heating and cooling device for construction equipment according to an embodiment of the present invention includes: an engine including a heat exchanger and an engine coolant pump;
an SCR mounted on an exhaust pipe of the engine to perform a reduction process on nitrogen oxides in exhaust gas discharged along the exhaust pipe;
a urea-water solution tank storing a urea-water solution;
an injector mounted on the exhaust pipe at an upstream of the SCR to inject the urea-water solution, supplied from the urea-water solution tank by a urea-water solution pump, into the exhaust pipe;
a valve installed on a conduit between the engine coolant pump and the urea-water solution tank and supplying an engine coolant from the engine coolant pump to the urea-water solution tank when being opened in order to increase a temperature of the urea-water solution in the urea-water solution tank to a set value; and
a controller for controlling the valve to be opened in order to supply the engine coolant to the urea-water solution tank, and driving the urea-water solution pump to supply the urea-water solution in the urea-water solution tank to the injector.

In order to accomplish the above and other objects, a urea-water solution heating and cooling device for construction equipment according to another embodiment of the present invention includes: an engine including a heat exchanger and an engine coolant pump;
an SCR mounted on an exhaust pipe of the engine to perform a reduction process on nitrogen oxides in exhaust gas discharged along the exhaust pipe;
a urea-water solution tank storing a urea-water solution;
a urea-water solution heat exchanger for performing heat exchange of an introduced engine coolant and supplying the heat-exchanged engine coolant to the urea-water solution tank so as to lower a temperature of the urea-water solution in the urea-water solution tank to a set value;
an injector mounted on the exhaust pipe at an upstream of the SCR to inject the urea-water solution, supplied from the urea-water solution tank by a urea-water solution pump, into the exhaust pipe;
a control valve installed at a junction of a conduit between the engine coolant pump and the urea-water solution heat exchanger and a conduit between the engine coolant pump and the urea-water solution tank, and supplying a part of the engine coolant from the engine coolant pump to the urea-water solution heat exchanger or to the urea-water solution tank when the valve is switched to a position in order to correspond to the temperature of the urea-water solution in the urea-water solution tank; and
a controller for controlling the position of the control valve to be switched in order to supply the engine coolant to the urea-water solution tank or to the urea-water solution heat exchanger, and driving the urea-water solution pump to supply the urea-water solution in the urea-water solution tank to the injector.

### Advantageous Effects

As described above, according to the present invention constructed above, the urea-water solution heating and cooling device for construction equipment is configured to maintain the urea-water solution supplied to the exhaust pipe in the urea-water solution tank at the appropriate temperature so as to reduce the nitrogen oxides in the exhaust gas, the urea-water solution supplied to the urea injector from the urea-water solution tank is smoothly injected into the exhaust pipe, thereby increasing an efficiency of reducing the nitrogen oxides in the exhaust gas.

### Description of Drawings

FIG. 1 is a diagram of a device reducing nitrogen oxides by supplying a urea-water solution to an exhaust pipe for construction equipment by a prior art;
FIG. 2 is a block diagram showing a urea-water solution heating device for construction equipment according to a preferred embodiment of the present invention;
FIG. 3 is a block diagram showing a urea-water solution heating and cooling device for construction equipment according to another preferred embodiment of the present invention;
FIG. 4 is a diagram showing a cooling process for a urea-water solution in a urea-water solution tank of a urea-water solution heating and cooling device for construction equipment according to another preferred embodiment of the present invention;
FIG. 5 is a diagram showing a heating process for a urea-water solution in a urea-water solution tank of a urea-water solution heating and cooling device for construction equipment according to another preferred embodiment of the present invention.

### <Description of the Reference Numerals in the Drawings>

- 1;: heat exchanger
- 2;: cooling fan
- 3;: engine coolant pump
- 4;: engine
- 5;: exhaust pipe
- 6;: selective catalytic reduction (SCR)
- 7;: urea injector
- 8;: urea-water solution pump
- 9;: urea-water solution tank
- 10;: controller
- 11;: diesel particulate filter (DPF)
- 12;: valve
- 13;: urea-water solution heat exchanger
- 14;: control valve
- 15;: check valve
- 16;: coolant channel
- 17;: engine coolant return line

### Best Mode

Hereinafter, urea-water solution heating and cooling devices for construction equipment according to embodiments of the present invention will be described with reference to the accompanying drawings.

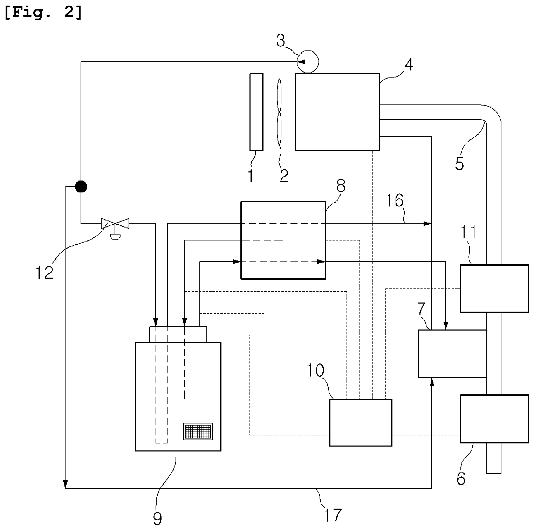

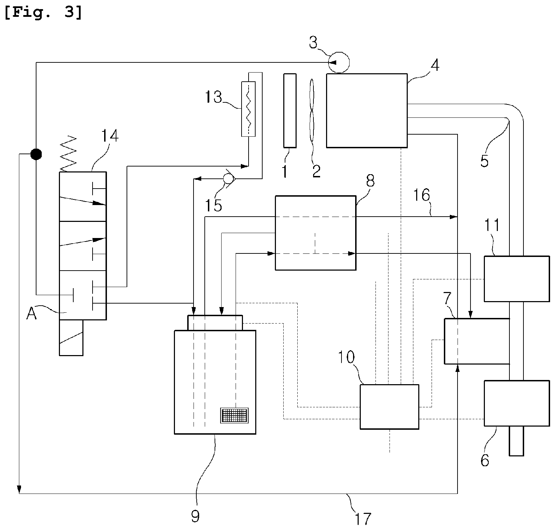

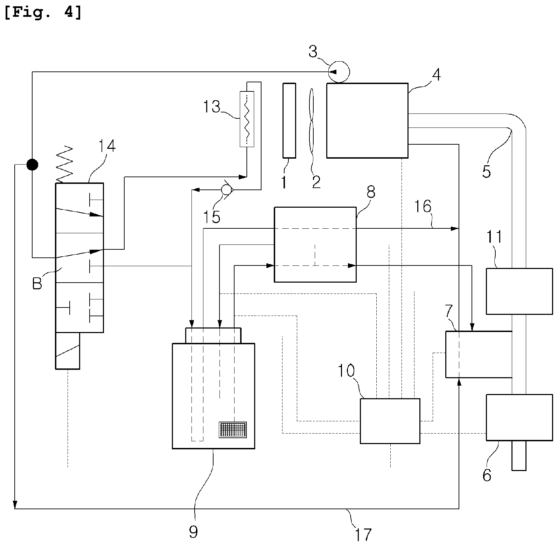

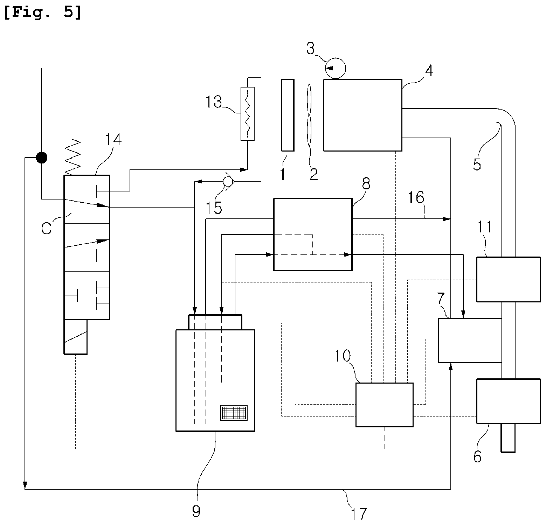

FIG. 2 is a block diagram showing a urea-water solution heating device for construction equipment according to one preferred embodiment of the present invention, FIG. 3 is a block diagram showing a urea-water solution heating and cooling device for construction equipment according to another preferred embodiment, FIG. 4 is a diagram showing a cooling process for a urea-water solution in a urea-water solution tank of a urea-water solution heating and cooling device for construction equipment according to another preferred embodiment of the present invention, and FIG. 5 is a diagram showing a heating process for a urea-water solution in a urea-water solution tank of a urea-water solution heating and cooling device for construction equipment according to another preferred embodiment of the present invention.

Referring to FIG. 2, the urea-water solution heating device for construction equipment according to one embodiment of the present invention includes:

a heat exchanger 1, a cooling fan 2, and an engine coolant pump 3, which are provided to a diesel engine 4.

A selective catalytic reduction (SCR) 6 is mounted on the exhaust pipe 5 to perform a reduction process by catalysis of nitrogen oxides (N0x) in exhaust gas discharged along an exhaust pipe 5 of the engine 4.

A urea injector 7 is mounted on the exhaust pipe 5 at an upstream of the SCR 6 to inject the urea-water solution (product name: Adblue, 32.5%) into the exhaust gas passing through the SCR 6.

A urea-water solution tank 9 storing the urea-water solution supplied to the injector 7 by a urea-water solution pump 8 is connected to the injector 7. The urea-water solution tank 9 may be composed of materials such as plastic or stainless steel.

A controller 10 controlling to drive the urea-water solution pump 8 in order to supply the urea-water solution in the urea-water solution tank 9 to the urea injector 7 is connected to the urea-water solution pump 8 and the urea injector 7.

A valve is installed on a conduit between the engine coolant pump 3 and the urea-water solution tank 9 to supply a part of an engine coolant from the engine coolant pump 3 to the urea-water solution tank 9 when being opened in order to increase a temperature of the urea-water solution in the urea-water solution tank to a set value.

A solenoid valve may be used as the valve 12 is to be switched between a position of an initial state closing the conduit and a position of an ON state opening the conduit in response to an electrical signal applied thereto from the controller 10.

The controller 10 controlling to drive the urea-water solution pump 8 in order to supply the urea-water solution in the urea-water solution tank 9 to the urea injector 7 is connected to the valve 12, to the urea-water solution pump 8 and to the urea injector 7.

The urea-water solution tank 9 may include a temperature sensor (not shown) detecting a temperature of the urea-water solution and outputting a detection signal to the controller 10.

An outlet of a coolant channel 16 is connected to an engine coolant return line 17, and the coolant channel 16 carries the engine coolant discharged after being heat-exchanged at the urea-water solution tank such that the engine coolant heat-exchanged with the urea-water solution is returned to the engine while passing through the urea-water solution pump so as to heat the urea-water solution pump by heat exchange with the heat-exchanged engine coolant.

According to the construction as described above, when the temperature of outside air is low, the urea-water solution supplied to the urea injector 7 from the urea-water solution tank 9 by the urea-water solution pump 8 can be heated by using the engine coolant, thereby the urea-water solution is maintained at an appropriate temperature.

In detail, when the temperature of the urea-water solution is lower than a set value, judged by a detection signal outputted from the temperature sensor (not shown) to the controller 10 installed on the urea-water solution tank 9, the valve 12 is changed to be open in response to an electrical signal applied from the controller 10.

Accordingly, some of the engine coolant supplied from the engine coolant pump 3 is introduced into the urea-water solution tank 9 passing through the valve 12. The engine coolant introduced into the urea-water solution tank 9 heats the urea-water solution in the urea-water solution tank 9 to the set value by heat exchange.

A part of the engine coolant excluding the engine coolant supplied to the urea-water solution tank 9 from the engine coolant pump 3 through the valve 12 returns to the engine 4 along the engine coolant return line 17.

The engine coolant supplied to the urea-water solution tank 9 and heat-exchanged with the urea-water solution returns to the engine 4 through the coolant channel 16 passing through the urea-water solution pump 8, thereby the urea-water solution pump 8 can be heated with the engine coolant heat-exchanged with the urea-water solution.

As described above, when the temperature of the urea-water solution in the urea-water solution tank 9 is lower than the set value, the urea-water solution is heated to an appropriate temperature by using the engine coolant to prevent the urea-water solution solidifying, thereby the urea-water solution from the urea-water solution tank 9 can be smoothly injected to the exhaust pipe 5 by the urea injector 7.

Referring to FIGS. 3 to 5, the urea-water solution heating and cooling device for construction equipment according to another embodiment of the present invention includes:
a heat exchanger 1, a cooling fan 2, and an engine coolant pump 3, which are provided to a diesel engine 4.

A selective catalytic reduction (SCR) 6 is mounted on the exhaust pipe 5 to perform a reduction process by catalysis of nitrogen oxides (N0x) in exhaust gas discharged along an exhaust pipe 5 of the engine 4.

A urea injector 7 is mounted on the exhaust pipe 5 at the upstream of the SCR 6 to inject the urea-water solution (product name: Adblue, 32.5%) into the exhaust gas passing through the SCR 6.

A urea-water solution tank 9 storing the urea-water solution supplied to the injector 7 by a urea-water solution pump 8 is connected to the injector 7. The urea-water solution tank 9 may be composed of materials such as plastic or stainless steel.

A urea-water solution heat exchanger 13 is provided to the engine 4 for heat-exchanging an engine coolant introduced to lower a temperature of the urea-water solution in the urea-water solution tank 9 to a set value and supplying the heat-exchanged engine coolant to the urea-water solution tank 9.

A control valve 14 supplies a part of the engine coolant from the engine coolant pump 3 to the urea-water solution heat exchanger 13 or to the urea-water solution tank 9 when the valve is switched to a position in order to correspond to a temperature of the urea-water solution in the urea-water solution tank 9, and the control valve 14 is installed at a junction of a conduit between the engine coolant pump 3 and the urea-water solution urea-water solution heat exchanger 13 and a conduit between the engine coolant pump 3 and the urea-water solution tank 9.

A controller 10, changing the control valve 14 in order to supply the engine coolant to the urea-water solution tank 9 or to the urea-water solution urea-water solution heat exchanger 13, and controlling to drive the urea-water solution pump 8 in order to supply the urea-water solution in the urea-water solution tank 9 to the urea injector 7, is connected to the control valve 14, to the urea injector 7, and to the urea-water solution pump 8.

The control valve 14 is a valve changing between
a first position A closing the conduit supplying the engine coolant to the urea-water solution heat exchanger 13 or to the urea-water solution tank 9 when the temperature of the urea-water solution in the urea-water solution tank 9 is maintained at a set value,
a second position B supplying the engine coolant to the urea-water solution heat exchanger 13, and then supplying the heat-exchanged engine coolant to the urea-water solution tank 9 when the temperature of the urea-water solution in the urea-water solution tank 9 is higher than the set value (60°C as one example), and
a third position C supplying the engine coolant directly to the urea-water solution tank 9 so as to increase the temperature of the urea-water solution to the set value when the temperature of the urea-water solution in the urea-water solution tank 9 is lower than the set value.

A check valve 15 preventing heat of the engine coolant for heating the urea-water solution in the urea-water solution tank 9 from transferring or flowing back to the urea-water solution heat exchanger 13 may be installed on a conduit between the urea-water solution heat exchanger 13 and the urea-water solution tank 9.

The urea-water solution tank 9 may include a temperature sensor (not shown) detecting a temperature of the urea-water solution and outputting a detection signal to the controller 10.

The urea-water solution heat exchanger 13 may be disposed in front of the heat exchanger 1 so as to be cooled by heat-exchanging with outside air cooler than outside air supplied to the heat exchanger 1.

An outlet of a coolant channel 16 is connected to an engine coolant return line 17, and the coolant channel 16 carries the engine coolant discharged after being heat-exchanged at the urea-water solution tank such that the engine coolant heat-exchanged with the urea-water solution is returned to the engine while passing through the urea-water solution pump so as to heat the urea-water solution pump by heat exchange with the heat-exchanged engine coolant.

According to the construction as described above, the urea-water solution supplied to the urea injector 7 from the urea-water solution tank 9 can be heated to an appropriate temperature by using the engine coolant, or can be cooled by using the engine coolant heat-exchanged with the urea-water solution heat exchanger 13, thereby the urea-water solution is maintained at the appropriate temperature.

In detail, as shown in FIG. 3, when the temperature of the urea-water solution is maintained at the set value in response to a detection signal that is detected by the temperature sensor (not shown) installed on the urea-water solution tank 9 and outputted to the controller 10, an electrical signal applied to a valve spring of the control valve 14 from the controller 10 is disconnected.

Accordingly, the control valve 14 maintains at the first position (refer to "A" position) closing an opening portion since the electrical signal is not applied from the controller 10, the control valve 14 closes the conduit supplying the engine coolant to the urea-water solution tank 9 or to the urea-water solution heat exchanger 13 from the engine coolant pump 3.

At this point, the engine coolant supplied from the engine coolant pump 3 returns to the engine 4 along the engine coolant return line 17.

As shown in FIG. 4, when the temperature of the urea-water solution of the urea-water solution tank 9 is higher than the set value (60°C as one example) by a detection signal of the temperature sensor installed on the urea-water solution tank 9, an electrical signal is applied to the opposite side of the valve spring of the control valve 14 valve from the controller 10 and the controller 10 switches a spool to the second position (refer to "B" position).

Accordingly, a part of the engine coolant supplied from the engine coolant pump 3 is supplied to the urea-water solution heat exchanger 13 passing through the control valve 14. When the engine coolant is supplied to the urea-water solution heat exchanger 13, outside air is delivered to the engine 4 passing through the urea-water solution heat exchanger 13 by the cooling fan 2, thereby the engine coolant in the urea-water solution heat exchanger 13 heat exchanges with outside air.

At this point, when the urea-water solution heat exchanger 13 is disposed in front of the heat exchanger 1, the urea-water solution heat exchanger 13 can be heat-exchanged with outside air, cooler than outside air inhaled to the engine 4 by the cooling fan 2 and then supplied to the heat exchanger 1, thereby an efficiency of heat exchange can be increased.

The engine coolant heat-exchanged with the urea-water solution heat exchanger 13 moves to the urea-water solution tank 9, and the engine coolant is heat-exchanged with the urea-water solution inside of the urea-water solution tank 9, thereby the temperature of the urea-water solution can be lowered to the set value.

Therefore, the urea-water solution heat-exchanged at the urea-water solution tank 9 and maintained at the appropriate temperature is smoothly supplied to the urea injector 7 by the urea-water solution pump 8.

On the other hand, some of the engine coolant excluding the engine coolant supplied to the urea-water solution heat exchanger 13 from the engine coolant pump 3 returns to the engine 4 along the engine coolant return line 17.

As shown in FIG. 5, when the temperature of the urea-water solution of the urea-water solution tank 9 is lower than the set value by a detection signal of the temperature sensor installed on the urea-water solution tank 9, an electrical signal is applied to the opposite side of the valve spring of the control valve 14 from the controller 10 and the controller 10 switches the spool to the third position (refer to "C" position).

Accordingly, a part of the engine coolant supplied from the engine coolant pump 3 is directly supplied to the urea-water solution tank 9 not passing through the control valve 14.

At this point, the engine coolant moving to the urea-water solution tank 9 is heat-exchanged with the urea-water solution inside of the urea-water solution tank 9, thereby the temperature of the urea-water solution can be increased to the set value.

Furthermore, the check valve 15 installed on the conduit between the urea-water solution heat exchanger 13 and the urea-water solution tank 9 prevents the heat of the engine coolant for heating the urea-water solution in the urea-water solution tank 9 from flowing back to the urea-water solution heat exchanger 13, thereby preventing the temperature of the urea-water solution in the urea-water solution tank 9 from being lowered.

Therefore, the urea-water solution heat-exchanged at the urea-water solution tank 9 and maintained at the appropriate temperature is smoothly supplied to the urea injector 7 by the urea-water solution pump 8.

On the other hand, some of the engine coolant excluding the engine coolant supplied to the urea-water solution heat exchanger 13 from the engine coolant pump 3 returns to the engine 4 along the engine coolant return line 17.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

### Industrial Applicability

As described above, according to the present invention constructed above, the urea-water solution heating and cooling device for construction equipment has an effect of maintaining the urea-water solution in the urea-water solution tank supplied to the exhaust pipe at the appropriate temperature by using the engine coolant so as to reduce the nitrogen oxides of the exhaust gas discharged from the diesel engine.

## Claims

1. A urea-water solution heating device for construction equipment, the device comprising:
an engine including a heat exchanger and an engine coolant pump;
an SCR mounted on an exhaust pipe of the engine to perform a reduction process on nitrogen oxides in exhaust gas discharged along the exhaust pipe;
a urea-water solution tank storing a urea-water solution;
an injector mounted on the exhaust pipe at an upstream of the SCR to inject the urea-water solution, supplied from the urea-water solution tank by a urea-water solution pump, into the exhaust pipe;
a valve installed on a conduit between the engine coolant pump and the urea-water solution tank and supplying an engine coolant from the engine coolant pump to the urea-water solution tank when being opened in order to increase a temperature of the urea-water solution in the urea-water solution tank to a set value; and
a controller for controlling the valve to be opened in order to supply the engine coolant to the urea-water solution tank, and driving the urea-water solution pump to supply the urea-water solution in the urea-water solution tank to the injector.

2. The urea-water solution heating device of claim 1, wherein the valve is a solenoid valve changing between an initial state closing the conduit and an ON state opening the conduit in response to an electrical signal applied thereto.

3. The urea-water solution heating device of claim 1, wherein the urea-water solution tank includes:
a temperature sensor detecting the temperature of the urea-water solution in the urea-water solution tank and outputting a detection signal to the controller.

4. The urea-water solution heating device of claim 1, further comprising:
a coolant channel carrying the engine coolant discharged after being heat-exchanged at the urea-water solution tank such that the heat-exchanged engine coolant is returned to the engine while passing through the urea-water solution pump so as to heat the urea-water solution pump by heat exchange with the heat-exchanged engine coolant.

5. A urea-water solution heating and cooling device for construction equipment, the device comprising:
an engine including a heat exchanger and an engine coolant pump;
an SCR mounted on an exhaust pipe of the engine to perform a reduction process on nitrogen oxides in exhaust gas discharged along the exhaust pipe;
a urea-water solution tank storing a urea-water solution;
a urea-water solution heat exchanger for performing heat exchange of an introduced engine coolant, and supplying the heat-exchanged engine coolant to the urea-water solution tank so as to lower a temperature of the urea-water solution in the urea-water solution tank to a set value;
an injector mounted on the exhaust pipe at an upstream of the SCR to inject the urea-water solution, supplied from the urea-water solution tank by a urea-water solution pump, into the exhaust pipe;
a control valve installed at a junction of a conduit between the engine coolant pump and the urea-water solution heat exchanger and a conduit between the engine coolant pump and the urea-water solution tank, and supplying a part of the engine coolant from the engine coolant pump to the urea-water solution heat exchanger or to the urea-water solution tank when the valve is switched to a position in order to correspond to the temperature of the urea-water solution in the urea-water solution tank; and
a controller for controlling the position of the control valve to be switched in order to supply the engine coolant to the urea-water solution tank or to the urea-water solution heat exchanger, and driving the urea-water solution pump to supply the urea-water solution in the urea-water solution tank to the injector.

6. The urea-water solution heating and cooling device of claim 5, wherein the control valve includes:
a first position closing the conduit supplying the engine coolant to the urea-water solution heat exchanger or to the urea-water solution tank when the temperature of the urea-water solution in the urea-water solution tank is maintained at the set value,
a second position supplying the engine coolant to the urea-water solution heat exchanger to perform heat exchange, and then supplying the heat-exchanged engine coolant to the urea-water solution tank when the temperature of the urea-water solution in the urea-water solution tank is higher than the set value, and
a third position supplying the engine coolant directly to the urea-water solution tank so as to increase the temperature of the urea-water solution to the set value when the temperature of the urea-water solution in the urea-water solution tank is lower than the set value.

7. The urea-water solution heating and cooling device of claim 5, further comprising:
a check valve being installed on a conduit between the urea-water solution heat exchanger and the urea-water solution tank and preventing heat of the engine coolant for heating the urea-water solution in the urea-water solution tank from flowing back to the urea-water solution heat exchanger.

8. The urea-water solution heating and cooling device of claim 5, wherein the urea-water solution tank includes:
a temperature sensor detecting the temperature of the urea-water solution in the urea-water solution tank and outputting a detection signal to the controller.

9. The urea-water solution heating and cooling device of claim 5, wherein the urea-water solution heat exchanger is disposed in front of the heat exchanger of the engine so as to be cooled by heat exchange with outside air having a temperature lower than a temperature of outside air supplied to the heat exchanger of the engine.

10. The urea-water solution heating and cooling device of claim 5, further comprising:
a coolant channel carrying the engine coolant discharged after being heat-exchanged at the urea-water solution tank such that the heat-exchanged engine coolant is returned to the engine while passing through the urea-water solution pump so as to heat the urea-water solution pump by heat exchange with the heat-exchanged engine coolant.
